# EUROPEAN PATENT SPECIFICATION

(11) **EP 1 809 459 B1**
(45) Date of publication and mention of the grant of the patent: **23.05.2012**
(21) Application number: 05789537.7
(22) Date of filing: 22.09.2005
(51) Int. Cl.: B29C 43/36, B29C 43/08, B29C 43/14, B29C 49/02

(54) **Machine provided with a plurality of actuators**
Mit mehreren Stellgliedern versehene Vorrichtung
Machine dotee d'une pluralite d'actionneurs

(30) Priority: 24.09.2004 IT MO20040248
(43) Date of publication of application: 25.07.2007
(73) Proprietor: SACMI Cooperativa Meccanici Imola Società Cooperativa, 40026 Imola (Bologna) (IT)
(72) Inventor: BALBONI, Alessandro, I-40057 Granarolo dell'Emilia (IT); PARRINELLO, Fiorenzo, I-40059 Medicina (IT)
(74) Representative: Crugnola, Pietro
(86) International application number: PCT/EP2005/010269
(87) International publication number: WO 2006/032503

(56) References cited:
- EP-A- 0 428 792
- EP-A- 1 293 332
- DE-A1- 1 479 726
- GB-A- 1 052 337
- US-A- 2 621 363
- US-A- 4 384 834
- US-A1- 2001 048 953
- US-A1- 2003 102 587
- PATENT ABSTRACTS OF JAPAN vol. 1996, no. 06, 28 June 1996 (1996-06-28) & JP 08 052743 A (MATSUSHITA ELECTRIC IND CO LTD), 27 February 1996 (1996-02-27)
- PATENT ABSTRACTS OF JAPAN vol. 1997, no. 12, 25 December 1997 (1997-12-25) & JP 09 213726 A (TOSHIBA MECHATRONICS KK), 15 August 1997 (1997-08-15)

## Description

The present invention relates to an operating machine in which at least one actuator acts and actuating apparatuses which actuate moulding members in an moulding machine and a control system of moulding machine.

The invention refers in particular, but not exclusively, to the compression moulding of plastics for obtaining objects such as caps suitable for being associated with containers. In this description and in the following claims the term "punch" indicates the male half mould and the term "die" indicates the female or cavity half mould.

US 2621363 discloses an automatic machine for moulding articles from thermosetting or thermoplastic material.

The machine comprises a preliminary mould in which a semi-moulding is obtained from a predetermined quantity of moulding material and a main mould in which the moulding operation of the semi-moulding is completed. The machine further comprises a valve which controls the supply of oil to and its discharge from the cylinders for actuating the upper and lower members of the main mould and the cylinder for the plunger of the preliminary mould. The valve comprises an angularly movable valve member which is arranged within a casing and is angularly movable therein with a snap-action between two extreme positions. When the valve member is in the first position, the plungers of the above-mentioned cylinders are projected. When the valve member is in the second position, the plungers of the above-mentioned cylinders are retracted.

GB 1052337 discloses a machine tool comprising a rotatable support member or turret having a radial flange which forms a table and which rotates about the axis of a vertical column on a base member. The table carries a number of independently rotatable work spindles. The turret, which is externally square in plan, carries a vertical and a horizontal slide member on each face, which carry tool holders. To the upper end of the column is secured a drum-type cam member with peripheral grooves in which are located cam followers which during rotation of the turret effect longitudinal and transverse movements of the slides and in consequence the holders and cutting tools. The transverse movement of the slide is effected through a bell-crank lever. The turret is driven by an electric motor through gearing and the work spindles are driven by individual motors.

Apparatuses comprising moulds for the compression moulding of plastics are known comprising a die provided with a cavity in which a certain quantity of plastics is inserted in a pasty state, and a punch suitable for compressing the plastic material inside the cavity.

The cavity and the punch are shaped in such a manner as to give the plastics a shape corresponding to the object to be obtained. In particular, in the moulding of stoppers, or lids or caps the die defines an external surface of the object and the punch defines an internal surface of the object.

In order to open and close the mould, the die and the punch are moved towards and away from each other by actuators that may be of a mechanical or hydraulic type.

The hydraulic actuators comprise a cylinder inside which a piston is movable driven by pressurised oil that controls the movement of the punch and/or the die.

A drawback of the hydraulic actuators is that they involve significant system and structural complication, in particular if a plurality of moulds fitted to the same rotatable turntable is provided.

A further drawback of the hydraulic actuators is that they have a follower organ, the speed of which is not easily controllable.

As a result, the obtained caps may have unacceptable drawbacks, for example burrs, due to asymmetrical and nonuniform flows of the plastic in the mould.

A still further drawback of the hydraulic actuators is that it is necessary to constantly control the fluid contained inside them and intervene in the case of losses and/or leaks from the latter.

The use of hydraulic actuators furthermore leads to the risk that a certain quantity of oil may come into contact with the plastics being moulded, for example through an oil leak or through the evaporation of particles of oil into the air surrounding the moulding environment, thereby causing contamination and a possible deterioration to the formed object.

The mechanical actuators may comprise a cam, which controls the movement of the punch or of the die.

The mechanical actuators thus have numerous drawbacks inasmuch as they need very expensive components and require extremely precise assembly of these components.

Furthermore, these actuators are rather stiff because they do not allow simple adjustment of the stroke that the punch, or the die, has to perform and of the speed with which the stroke is performed. This adjustment can in fact be obtained only by replacing parts of the actuators.

The mechanical actuators furthermore greatly suffer from wear to the components that constitute them, so after prolonged operation they tend to be imprecise.

In particular, if the mechanical actuators are worn they are not able to ensure preset pressure between the punch and the die, which may cause undesired escapes of material from the die.

Furthermore, as the mechanical actuators are equipped with a fixed stroke, it is not possible to vary the clamping pressure of the mould according to the properties of the material, in particular of the latter's fluidity.

In addition, as the mechanical actuators do not enable stress of the pulsed type to be avoided, for example blows that may be generated in the mould during moulding, support structures must be provided for the moulds that are robust enough to resist stresses.

Alternatively, shock-absorbing devices can be provided interposed between the actuator and the die and/or the punch that enable the stress to be maintained substantially constant to which the punch, the die and the organs for their operation are subjected.

In particular, if inside the die an excessive dose of pasty plastics is deposited because of incorrect operation of a supply device of the plastics, the shock-absorbing devices prevent the great stress that is generated from damaging, possibly irreparably, the mould.

The shock-absorbing devices furthermore enable to a certain extent differences between the actual stroke and the theoretical stroke of the actuators to be compensated, these differences being for example due to the wear that affects the cams.

The shock-absorbing devices may comprise a pneumatic cylinder interposed between the die and/or the punch and the respective actuator.

The known apparatuses comprise a rotatable turntable to which a plurality of the aforementioned dies is fixed, for example arranged in angularly equidistant positions.

Each mould is operated by an actuator with which a control unit is associated.

Apparatuses are furthermore known in which each mould comprises a punch fixed to a frame of the turntable and a die that is fixed to a movable part of an actuator that moves the die towards and away from the punch. Alternatively, it is also known to fix the die to a part of the frame of the turntable and fix the punch to an actuator.

During operation, each mould is opened in such a way that a formed cap can be extracted from it and a preset quantity of plastics in the pasty state is inserted inside the mould to obtain a further cap.

Subsequently, the mould is closed to obtain the moulding of a cap and the stabilisation of the form of the aforementioned cap.

The aforementioned phases occur whilst the turntable is being rotated.

The phase of extraction of the formed cap and the phase of insertion of the pasty plastics require rather a limited time during which the turntable performs a rotation corresponding to an angle of a few tens of degrees, for example about 20 degrees.

The phases of moulding and stabilisation of the form, on the other hand, occur over a decisively longer time whilst the mould, during rotation of the turntable performs a further angle, substantially explementary to the above angle.

A drawback of the apparatuses disclosed above consists of the fact that they are not very cheap, because of the high cost of the actuators and of the control units arranged to regulate their operation.

An object of the invention is to improve the apparatuses for compression moulding of plastics.

Another object of the invention is to obtain an apparatus for compression moulding of plastics that is rather cheap.

A further object of the invention is to obtain an apparatus for compression moulding of plastics that enables operation of the moulds to be effectively controlled.

According to the invention, a machine is provided as defined in claim 1. Preferred embodiments are disclosed in the subclaims.

In one embodiment, the actuating devices control the opening and closing of mould means for the compression moulding of plastics.

Owing to the invention, it is possible to obtain an apparatus for the compression moulding of plastics having rather a low cost.

In this apparatus, in fact, the use of switching means enables one or more control units to be installed to control a greater number of actuating means rather than one control unit for each actuating device, as occurs in the apparatuses according to the state of the art.

The invention can be better understood and implemented with reference to the attached drawings that illustrate some embodiments thereof by way of non-limitative example, in which:
Figure 1 is a plan view of an apparatus for moulding objects in plastics;
Figure 2 is a schematic axial section of the apparatus in
Figure 2;

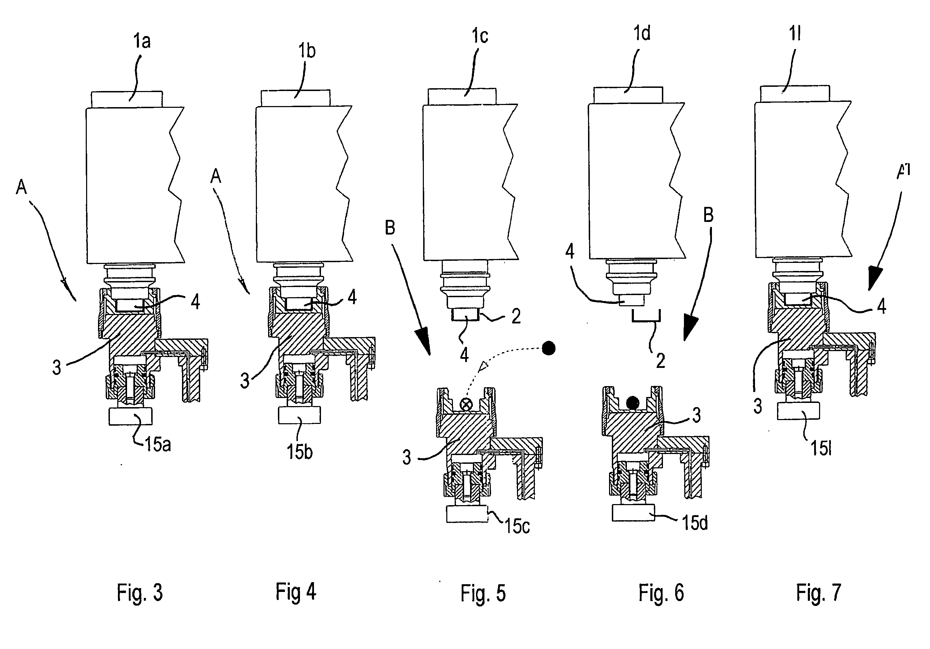

Figures 3 to 7 are schematic axial sections showing the positions of a plurality of moulds associated with rotatable turntable means of the apparatus in a given instant of operation of the apparatus;

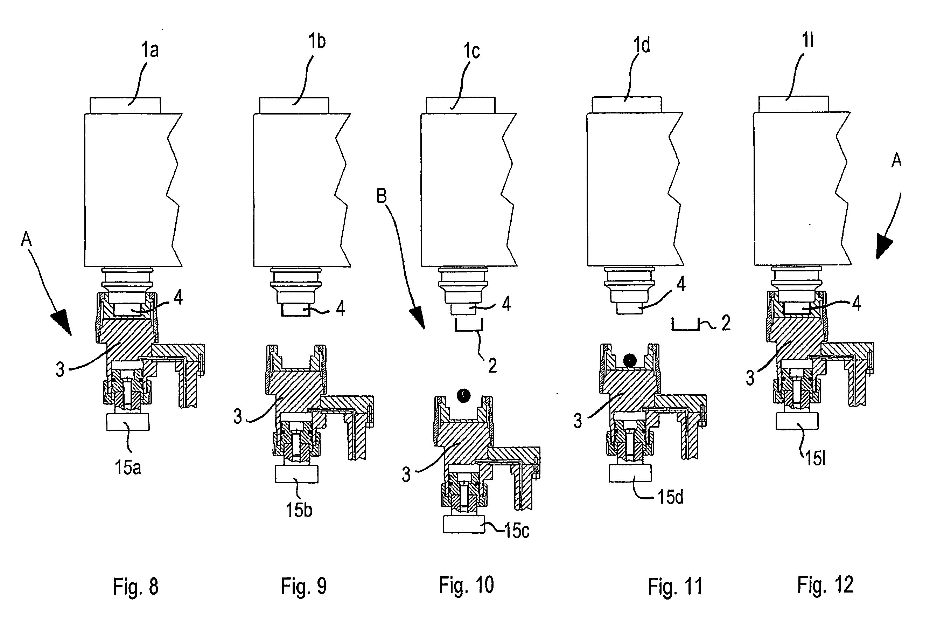

Figures 8 to 12 are schematic axial sections showing the positions of the moulds in Figures 3 to 7, after the turntable means has performed a rotation corresponding to half an advance step;

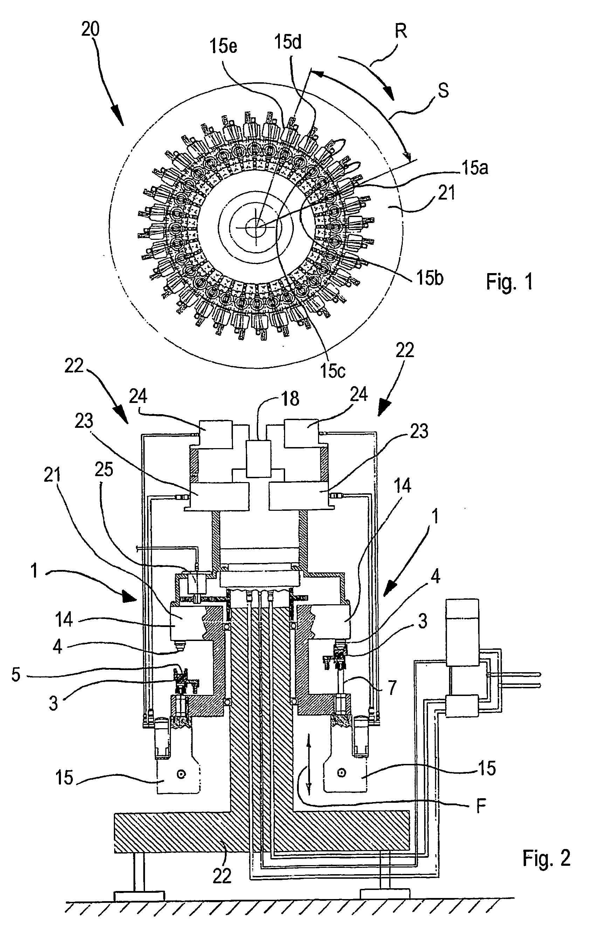

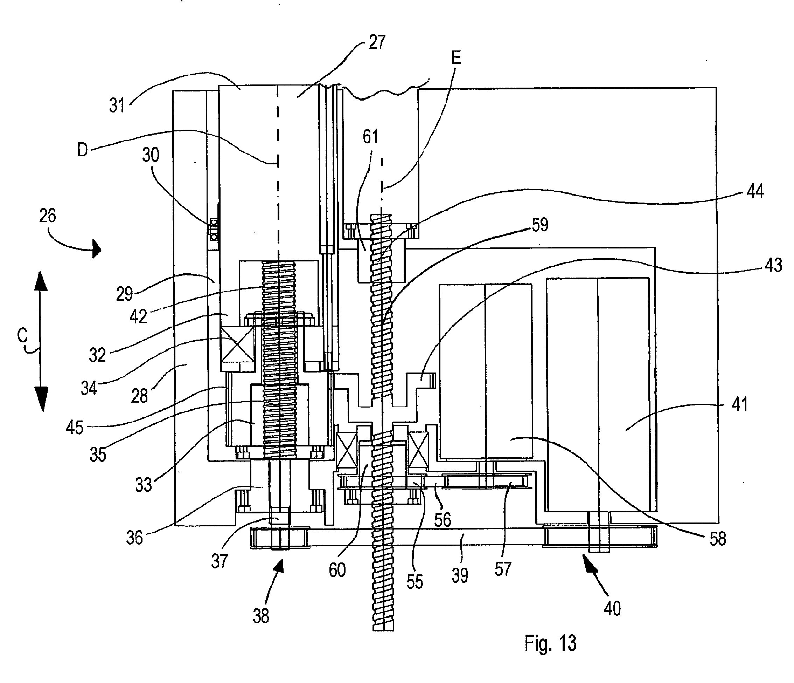

Figure 13 is a schematic axial section of electromechanical actuating means of the apparatus in Figure 1, shown in a first operating configuration;

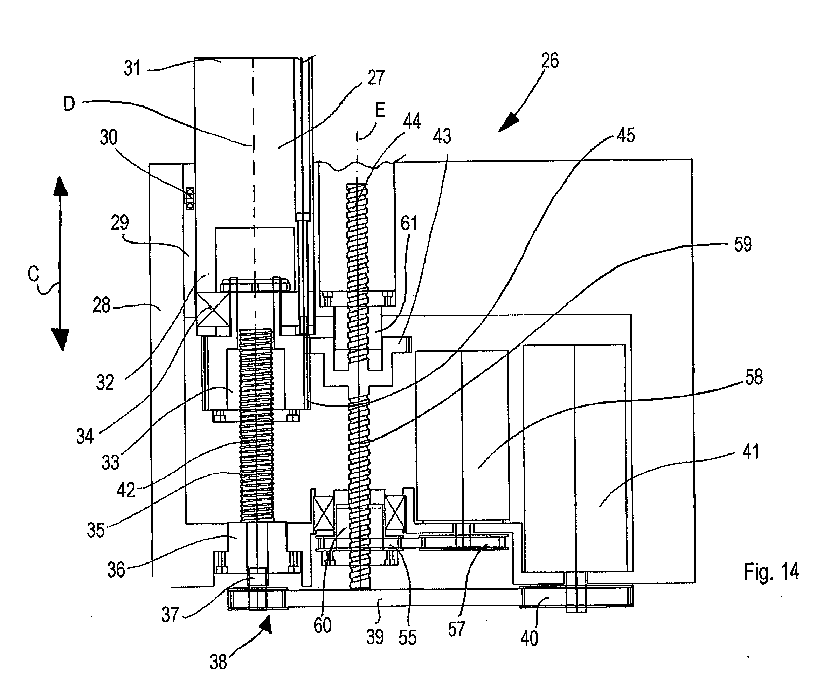

Figure 14 is a section like the one in Figure 13 showing the electromechanical actuating means in a second operating configuration;

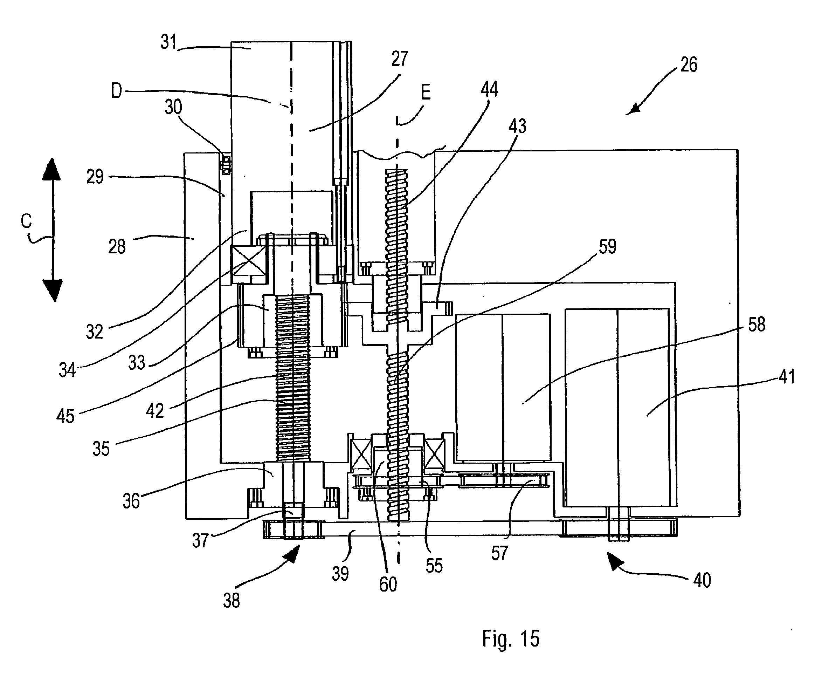

Figure 15 is a section like the one in Figure 13 showing the electromechanical actuating means in a third operating configuration;

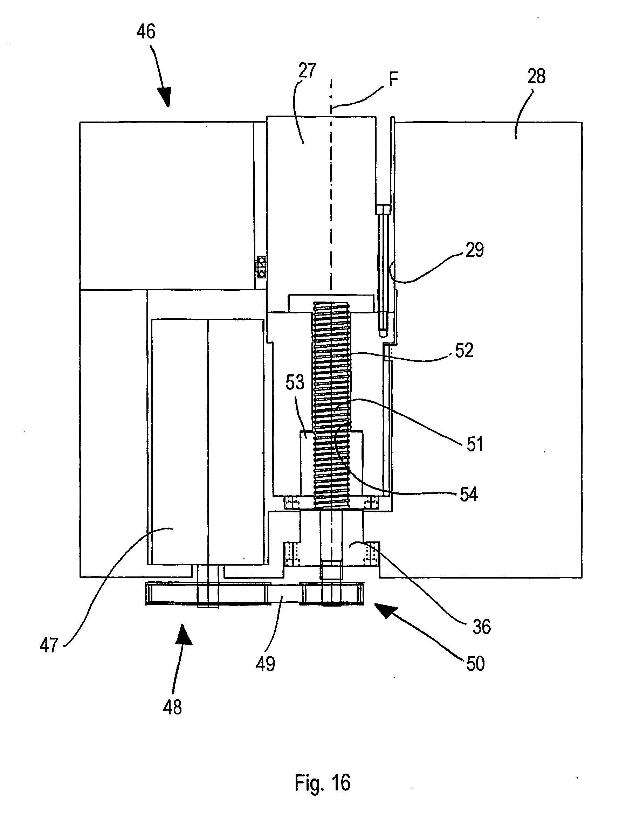

Figure 16 is a section like the one in Figure 13 showing further electromechanical actuating means, made according to a version, shown in a further first operating configuration;

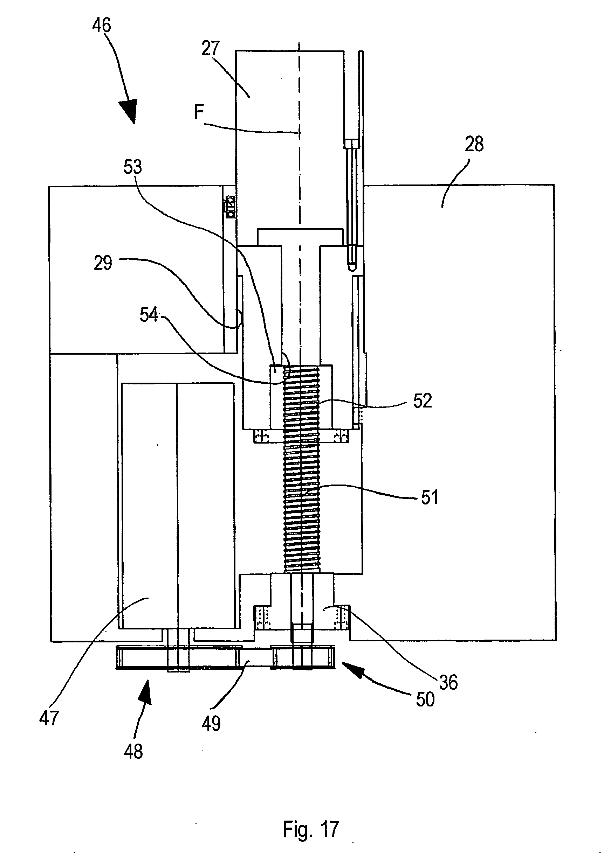

Figure 17 is a section like the one in Figure 13 showing the further electromechanical actuating means in Figure 16 in a further second operating configuration;

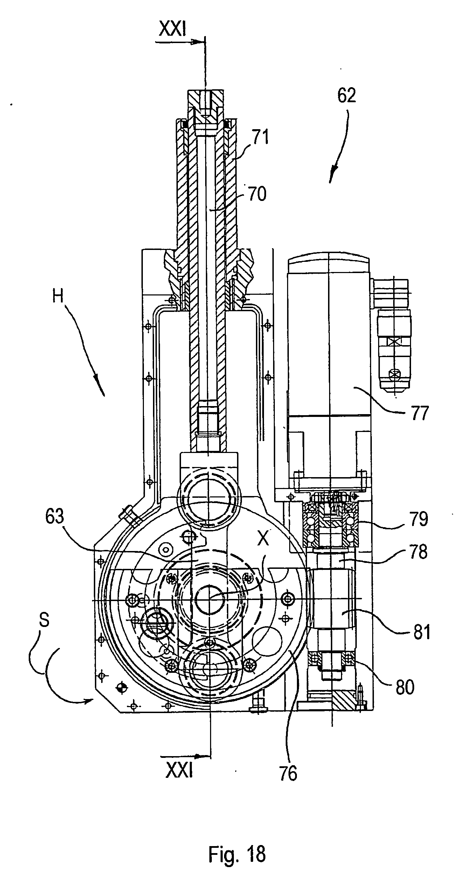

Figure 18 is a schematic axial section showing still further electromechanical actuating means, made according to a version, shown in a still further first operating configuration;

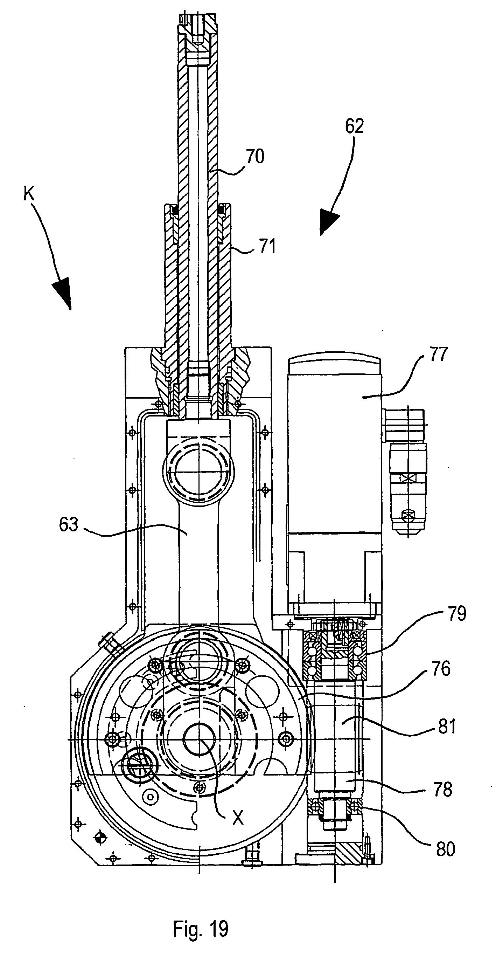

Figure 19 is a section like the one in Figure 18 showing the still further electromechanical actuating means in a still further second operating configuration;

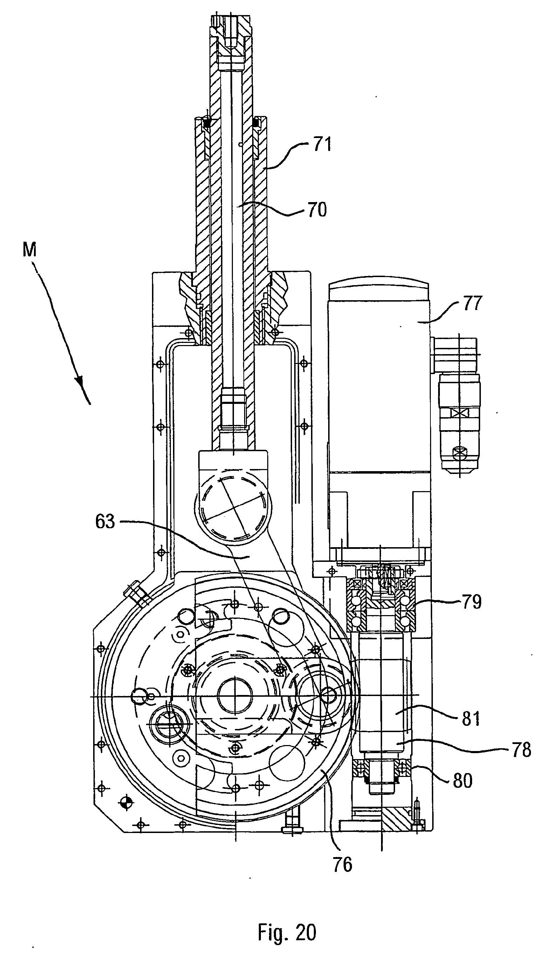

Figure 20 is a section like the one in Figure 18 showing the still further electromechanical actuating means in an intermediate operating configuration between the still further first operating configuration shown in Figure 18 and the still further second operating configuration shown in Figure 19;

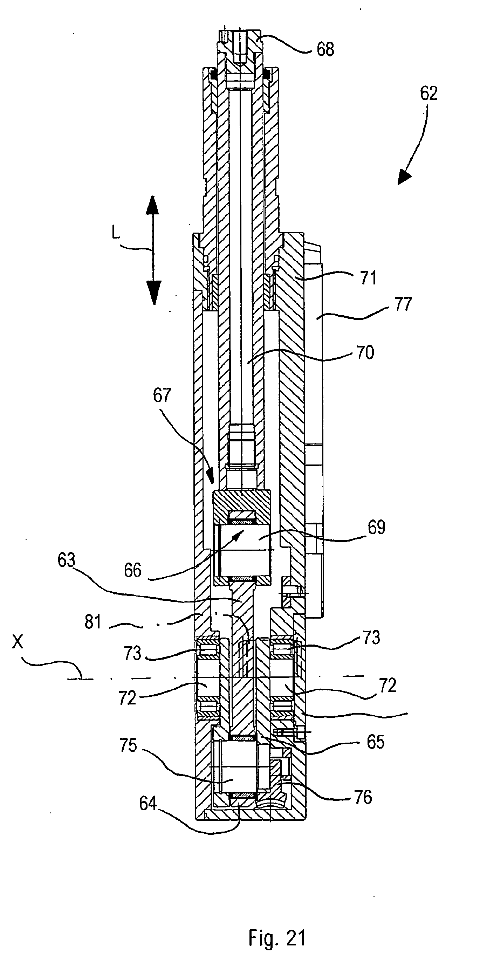

Figure 21 is a section taken along plane XXI-XXI di Figure 18;

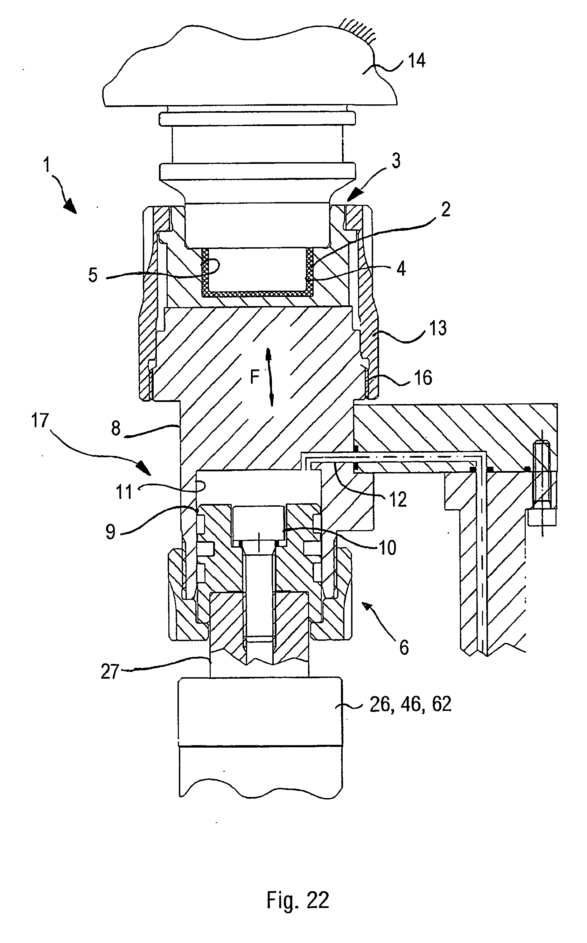

Figure 22 is a schematic axial section showing mould means of the apparatus in Figure 1.

With reference to Figures 1 to 12, there is shown an apparatus 20 for the compression moulding of plastics for obtaining caps 2, comprising a turntable 21 with which a plurality of moulds 1 is associated.

Each mould 1 comprises a die 3 provided with a cavity 5 suitable for defining an external surface of the caps 2, and a punch 4 arranged to press the plastics into the cavity 5 and suitable for defining an internal surface of the caps 2.

The punch 4 is fixed to a support element 14 and remains stationary during operation of the mould 1.

Each mould 1 is associated with an actuating device 15, which will be disclosed in greater detail below, which controls, through a movable member 7, the movement of the die 3 towards and away from the punch 4, in the direction indicated by the arrow F.

The turntable 21 is rotatable in the direction indicated by the arrow R.

The moulds 1 are connected to the turntable 21 in such a way as to be arranged at angular distances of a constant amplitude.

With each mould 1 a transducer - not shown - is furthermore associated that is arranged to detect the stroke performed by the movable member 7 of the actuating device 15, to which the die 3 is fixed.

Figures 3 to 7 show some of the moulds associated with the turntable 21, these moulds being indicated by the numeric references 1a, 1b, 1c, 1d, 1e.

Each mould 1a, 1b, 1c, 1d, 1e is provided with a respective actuating device 15a, 15b, 15c, 15d, 15e.

Figures 3 and 4 respectively show the moulds 1a, 1b in a closing position A, in which the plastics contained therein is moulded in such a way as to obtain a cap 2.

Figures 5 and 6 respectively show the moulds 1c and 1d in an opening position B in which a formed cap 2 is extracted from the respective mould, and a further dose of plastics in pasty state is inserted into the aforementioned mould.

Lastly, Figure 7 shows the mould 1e in a subsequent closing position A1, corresponding to the closing position A.

Each mould 1 goes from the closing position A to the opening position B and then to the subsequent closing position A1 whilst the turntable 21 rotates by an angle of a preset amplitude.

Subsequently, each mould 1 is kept in the closing position A, A1 in such a way as to obtain, after moulding, stabilisation of the form of the cap 2 contained therein.

Alternatively, in the case of particular needs of the productive cycle, further rotation intervals of the turntable 21 can be provided during which the moulds 1 are opened and subsequently reclosed.

As for example occurs if a seal promoting element has to be associated with a formed cap 2, the seal promoting element comprises a disc in plastics that is positioned inside the cap in contact with a base wall off the latter.

Figures 8 to 12 show the moulds 1a, 1b, 1c, 1d, 1e after the turntable 21 has performed a half advance step.

In this configuration, the mould 1a is still in the closing position A, the mould 1b is being transferred from the closing position A to the opening position B, the mould 1c is in the opening position B, in which the cap 2 is removed from the punch 5 and a further dose of plastics is inserted inside the die 3, the mould 1d is being transferred from the opening position B to the closing position A1, the mould 1e, lastly, is in the closing position A1.

The apparatus 20 comprises a control unit 18 arranged to control the operation of the actuating devices 15.

The control unit 18 can be arranged in a remote position in relation to the actuating devices 15.

The control unit 18 may be a control logic unit. Alternatively, a plurality of control units may be provided for controlling a larger number of actuating devices 15.

In other words, it is possible to provide a smaller number of control units than the number of actuating devices 15, instead of a control unit for each actuating device 15 as occurs in the known apparatuses.

In this case, each control unit can be dedicated to control a specific operation.

The apparatus furthermore comprises switching means 22 arranged to selectively connect each actuating device 15 to the control unit 18.

The apparatus can furthermore comprise supply means that is not shown arranged to supply the actuating devices 15, enabling its operation.

The supply means may comprise connectors and/or switches arranged to physically connect the actuators to delivery means of electric power.

The aforementioned connectors/switches also disconnect the actuators from the delivery means of electric power.

In other words, the supply means materially constitutes circuit components that connect and disconnect the actuators from the delivery means of electric power.

The actuation of the supply means - and consequently operation of the actuators - is managed by the control means to which the supply means is connectable by means of the switching means. In an embodiment, the supply means comprises a plurality of supply units, each supply unit being arranged in the proximity of a corresponding actuating device 15.

In this case, the switching means can selectively connect each supply unit to a respective actuating device 15.

In another embodiment, the supply means can comprise a single supply unit arranged in a remote position in relation to the actuating devices 15.

In particular, the supply unit can be integrated into the control unit 18.

Alternatively, the supply unit can be arranged in a remote position in relation to the control unit 18.

The switching means 22 comprises first switching means 23 suitable for selectively connecting the actuating devices 15 to the control unit 18 that regulates the supply of each actuating device 15.

The switching means 22 furthermore comprises second switching means 24 suitable for selectively connecting the transducers associated with the actuating devices 15 to the control unit 18.

The aforementioned transducers detect the stroke performed by the movable member 7 of each actuating device 15 and communicate it to the control unit 18 which, on the basis of this information, further operates the movable member 7 or stops it by intervening on the supply of the respective actuating device 15.

The apparatus furthermore comprises a position transducer 25 associated with the turntable 21 and suitable for communicating to the control unit 18 the position of the turntable 21 at each instant of the operating cycle.

The switching means 22 connects each actuating device 15 to the control unit 18 whereas the actuating device 15 performs, fixed relative to the turntable 21, a rotation corresponding to a preset angular interval.

In this case, each actuating device 15 is operated, during a period of time in which it travels, fixed relative to the turntable 21 said preset angular interval in such a way as to pass from an initial configuration to a final configuration. The switching means 22 can simultaneously connect a group of actuating devices 15a, 15b, 15c, 15d, 15e rather than a single actuating device 15 to the control unit 18.

The group of actuating devices 15a, 15b, 15c, 15d, 15e can occupy a sector S of the turntable 1 having a certain angular amplitude.

The switching means 22 furthermore interrupts the connection between each actuating device 15 and the control unit 18 for a further interval of time during which the actuating device 15 travels, fixed relative to the turntable 21, a further angular interval of preset amplitude.

In this case, each actuating device 15 is not operated whilst the turntable 21 travels the angular interval and thus maintains the same configuration during the entire interval of time.

In an embodiment, the further angular interval corresponds to an angle that is substantially explementary to the angle corresponding to the aforementioned angular interval.

In other words, in this case each actuating device 15 is connected to the control unit 18 whilst it travels a certain angular interval, the connection thus being interrupted whilst the turntable 21 finishes making a revolution around its own axis.

Alternatively, for each revolution of the turntable 21, a plurality of active angular intervals can be provided during which each actuating device 15 can be operated between an initial configuration and a final configuration.

In this case, each actuating device 15 is connected to the control unit 18 whilst it traverses each of the active intervals.

The connection between each actuating device 15 and the control unit 18 is thus interrupted in each further interval interposed between two active consecutive intervals.

The apparatus 1 is provided with one or more control units that are able to control a greater number of actuating devices 15 owing to the presence of the switching means 22.

In this way, the apparatus 1 is much cheaper than the known apparatuses, inasmuch as it is not necessary to install a control unit for each actuating device.

As shown in Figures 13, 14 and 15, the actuating devices 15 may comprise electromechanical actuating devices 26.

The electromechanical actuating devices 26 are provided with a movable connecting body 27 at an end 31 of which the die 3 is fixed.

Similar electromechanical actuating devices can operate the punch 4 by means of a further connecting body.

The connecting body 27 is received in a space 29 obtained inside a housing 28 and is slidable in an advance direction C in such a way as to be able to be projected outside the housing 28 or be received inside it.

Between the housing 28 and the connecting body 27 guide means 30 is interposed that promotes and directs the slide of the movable connecting body 27 inside the housing 28.

The connecting body 27 is connected, at a second end 32 opposite the first end 31, to a lead nut 33.

With the lead nut 33 bearing means 34 is associated that enables the lead nut 33 to rotate around an axis D in relation to the movable connecting body 27.

The lead nut 33 is centrally provided with a threaded through hole that is coaxial to the axis D and engages with first screw means 35 provided with a first thread 42.

The first screw means 35 is arranged along the axis D inside the housing 28 and is rotatably connected to a support 36 so as to be rotatable around the axis D.

The first screw means 35 is provided with a protruding portion 37 - not threaded - that projects through the support 36 outside the housing 28 and on which a first driven pulley 38 is splined. The first driven pulley 38 is connected by a first belt 39 to a first drive pulley 40 rotated by a first electric motor 41 installed inside the housing 28.

The lead nut 33 is peripherally provided with toothing 45 that engages with a toothed wheel 43 fixed relative to the second screw means 44.

The toothing 45 has an axial extent that is greater than the axial extent of the toothed wheel 43.

The second screw means 44 is provided with a second thread 59 having a pitch that is greater than the pitch of the first thread 42.

The second screw means 44 is arranged parallel to the first screw means 35.

The second screw means 44 is rotatable around a further axis E and can move along the latter when it is rotated.

The second screw means 44 is connected to a second driven pulley 55 which, by means of a second belt 56, is rotated by a second drive pulley 57 associated with a second electric motor 58.

The second screw means 44 interacts with a first lead nut element 60, fixed relative to the second driven pulley 55, and with a second lead nut element 61 arranged opposite the first lead nut element 60 in relation to the toothed wheel 43 and fixed to the housing 28.

During operation, the first electric motor 41 and the second electric motor 58 are actuated in such a way as to rotate respectively the first screw means 35 by the first driven pulley 38, and the first lead nut element 60 by means of the second driven pulley 55.

The first screw means 35, by rotating, forces the lead nut 33 and the connecting body 27 associated with it to move along the axis D.

The second screw means 44, actuated by the first lead nut element 60, moves along the further axis E in the same advance direction as the lead nut 33, and simultaneously rotates so that the toothed wheel 43 drags the lead nut 33 to rotate.

As a result, the lead nut 33 moves along the axis D and simultaneously rotates by screwing onto the first screw means 35.

The lead nut 33 advances along the axis D at an advance speed defined by two distinct components.

A first component is due to the movement given to the lead nut 33 by the first screw means 35 and a second component is due to the movement given to the lead nut 33 by the toothed wheel 43.

The advance speed thus depends on the geometry of the first thread 42, on the geometry of the second thread 59, on the rotation speed of the first motor means 41 and on the rotation speed of the second motor means 58.

When the connecting body 27 and the die 3 connected with it have performed a stroke of a preset amount, the second electric motor 58 is deactivated by stopping rotation of the first lead nut element 60.

The first electric motor 41, on the other hand, continues to rotate the first screw means 35, causing further movement of the lead nut 33 along the latter.

During the aforementioned further movement, the toothing 45 slides in relation to the toothed wheel 35.

The lead nut 33 shifts at a further advance speed having a value lower than the value of said advance speed, inasmuch as the further advance speed comprises solely a component due to the movement given to the lead nut 33 by the first screw means 35 and not also a further component due to the movement given to the lead nut 33 by the toothed wheel 43.

In operation, therefore, the die 3 is initially advanced at a great speed in such a way as to reduce the time required for closing and opening the mould 1 and, subsequently, at a reduced speed that enables the caps 2 to be moulded in an effective and precise manner, thus reducing blows and dynamic shocks.

With reference to Figures 16 and 17, there are shown electromechanical actuating devices 46, made according to a version.

The electromechanical actuating devices 46 comprise a housing 28 inside which an electric motor 47 is installed that rotates a drive pulley 48.

The drive pulley 48 is arranged outside the housing 28 and by means of a belt 49 actuates a driven pulley 50 that is fixed to screw means 51 provided with a thread 52.

The screw means 51 is rotatably connected to a support 36 so as to be rotatable around its own longitudinal axis F.

The thread 52 interacts with a further thread 54 obtained inside a lead nut element 53 fixed to a connecting body 27 that supports the die 3.

The lead nut element 53 is slidable along the axis F inside a cavity 29 obtained in the housing 28.

During operation, the electric motor 47, by means of the drive pulley 48 and the belt 49, rotates the driven pulley 50 and the screw means 51 connected thereto.

When the screw means 51 rotate, the thread 52 interacts with the further thread 54, forcing the lead nut element 53 to move along the axis F.

With reference to Figures 18 to 21, there are shown electromechanical actuating devices 62, made according to a further version.

The electromechanical actuating devices 62 comprise a connecting rod 63 having a first end 64 hinged on a crank pin 75 of a crankshaft 65 and a second end 66 hinged by means of a gudgeon 69 to an end 67 of a rod 70 provided with a further end 68 with which a die 3 of a mould 1 is associable, for example.

The rod 70 is partially received inside a sleeve 71 that acts as a guide element for guiding the movement of the rod 70 parallel to its longitudinal axis, as indicated by the arrow L.

The rod 70, therefore, actuated by the connecting rod 63 - as will be explained in greater detail below - moves the die 3 towards and away from a respective punch 4.

The crankshaft 65 comprises a pair of pivots 72 rotatingly supported by respective bearings 73, on a casing 74 of the electromechanical actuating devices 62.

To the crank pin 75 a toothed sector 76 is fixed having an angular extent greater than 180°.

The toothed sector 76 is rotatable, as will be disclosed in greater detail below, around an axis X coinciding with the rotation axis of the pivots 72 of the crankshaft 65.

The electromechanical actuating devices 62 furthermore comprises a further electric motor 77 provided with control means arranged to control an electric parameter of the electric motor 77.

The electric motor 77 is provided with a shaft 78, supported by first bearing means 79 and by second bearing means 80, with which a screw gear 81 is associated that engages with the toothed sector 76.

Figure 18 shows the rod 70 arranged in an operating configuration H, corresponding to the lower dead point, in which the die 3 is distanced from the corresponding punch 4 to enable the picking up of a formed object and the insertion inside the die 3 of a dose of plastics.

Figure 19 shows the rod 70 arranged in a further operating configuration K, corresponding to the upper dead point, in which the die 3 cooperates with the respective punch 4 to perform the moulding of an object.

The rod 70 is kept in the further operating configuration K even after moulding of the object to enable cooling and stabilisation of the form of the object.

In operation, when the further electric motor 77 is rotated in a preset direction, the toothed sector rotates in the direction indicated by the arrow S, so that the rod 70 is transferred from the operating configuration H to the further operating configuration K.

Once the phases of moulding, cooling and stabilisation of the form of an object have terminated, the electric motor 77 is rotated in a direction opposite the aforementioned preset direction, causing a corresponding rotation of the toothed sector 76 in a direction opposite that indicated by the arrow S. In this way, the rod 70 is returned to the operating configuration H.

The electromechanical actuating devices 62 enable the rod 70 - and therefore the die 3, or the punch 4 that is associated therewith - to be operated at a variable speed. In particular, the electromechanical actuating devices 62 enable a low speed to be obtained - and a high moulding force - at a final phase of the stroke of the rod 70, and a high speed at an intermediate phase of the stroke of the rod 70, thus ensuring rapid closure of the mould 1.

The speed of the die 3, or of the punch 4, is particularly high in the vicinity of a still further operating configuration M, shown in Figure 20, in which the cranking is in the squaring position.

Furthermore, the use of a screw gear 81 cooperating with the toothed sector 76 enables electromechanical actuating devices 62 that are substantially mechanically irreversible to be obtained, in particular at the upper dead point.

This enables the rod 70 to be maintained in the further operating configuration K - and thus with the mould closed - without the need to uninterruptedly supply the further electric motor 77.

In this way, the electric motor 77 and the respective control means are not stressed during the course of the phases of cooling and stabilisation of the form of an object, such phases being the longest-lasting in a work cycle of the apparatus.

Furthermore, the interposition between the rod 70 and the die 3, or the punch, of shock-absorbing means, which will be disclosed in greater detail below, enable a force to be exerted on the object contained in the mould during the phases of cooling and stabilisation of the form that is substantially constant despite the shrinkage due to cooling of the material with which the object was formed.

With reference to Figure 22, there is shown a mould 1 for the moulding of objects in plastics, for example caps 2.

The mould 1 comprises a die 3 provided with a cavity 5 suitable for defining an external surface of the caps 2, and a punch 4 arranged to press the plastics in the cavity 5 and suitable for a defining an internal surface of the caps 2.

The punch 4 is fixed relative to a support element 14 and remains stationary during operation of the mould 1.

The mould 1 is connected at one of its ends to an actuating device, for example an electromechanical actuating device 26, 46, 62.

The electromechanical actuating device 26, 46, 62 controls the movement of the die 3 towards and away from the punch 4 in the direction indicated by the arrow F. At a free end 6 of a connecting body 27 of the electromechanical actuating device 26, 46, 62 there is fixed a head 9 by means of a screw 10.

The head 9 is slidable inside a chamber 11 obtained in a base 8 of the die 3.

The die 3 is connected to the base 8 by a threaded ring nut 13 that engages in a corresponding threat 16 obtained in a base zone 8 opposite a further zone of the base 8 in which the chamber 11 is obtained.

In the base 8 a conduit 12 is furthermore obtained that is arranged to connect the chamber 11 with an external environment, in particular with a system for supplying pressurised fluid, for example a gaseous fluid, in particular air.

With the conduit 12 a maximum pressure conduit can be associated, that is not shown, that is arranged to enable the escape of the fluid from the chamber 11 if the pressure of the fluid has reached a preset threshold value.

The chamber 11, the conduit 12 and the pressurised fluid act as shock-absorbing means 17 arranged to prevent excessively energetic interaction of the die 3 with the punch 4.

In an embodiment that is not shown, the electromechanical actuating device 26, 46, 62 moves the punch 4 to and away from the die 3, which remains stationary during operation of the mould 1.

In this case, the shock-absorbing means 17 is positioned between the electromechanical actuating device 26, 46, 62 and the punch 4.

In a further embodiment that is not shown the electromechanical actuating device 26, 46, 62 operates the die 3, whilst the punch 4 remains fixed.

In this case, the shock-absorbing means 17 is interposed between the punch 4 and the support element 14 rather than between the die-3 and the electromechanical actuating device 26, 46, 62.

The shock-absorbing means 17 enables a virtually constant force to be maintained on the mould during the cooling phase of the objects, in particular, owing to the action of the pressurised fluid, the objects are maintained pressed despite the shrinkage caused by cooling of the plastics.

The shock-absorbing means 17, when associated with mechanically irreversible electromechanical actuating devices (at least in the configurations near the upper dead point), enable the motor means to be kept inactive with which the electromechanical actuating devices are provide during the entire cooling phase. This enables the mechanical and electronic components of the apparatus not to be unnecessarily stressed.

Electromechanical actuating devices cooperating with shock-absorbing means 17 are particularly suitable for being used in combination with the control unit or units 18 and the switching means 22 disclosed with reference to Figures 1 to 12.

In this case, in fact, the switching means 22 can connect the electromechanical actuating devices to the control unit, or units 18, during the phase of supply of the mould with plastics and during the moulding phase.

Subsequently, the switching means 22 can disconnect the electromechanical actuating devices from the control unit, or units 18, during the cooling phase, an appropriate clamping force being generated on the mould, in this operating configuration, by the shock-absorbing means 17.

Alternatively, the shock-absorbing means may not be provided. This is so in cases in which the electromechanical actuating devices are of the high-performance type.

In this case, electric motor means with which the electromechanical actuating devices are provided may be controlled whilst powered up in order to exert a controllable force on the mould 1.

In an embodiment, the electromechanical actuating devices may comprise mechanically reversible electromechanical actuating devices that comprise a motion inlet and a motion outlet that can be mutually reversed during operation.

## Claims

1. Machine, comprising a plurality of actuating devices (15) supported by rotatable turntable means (21) for actuating moulding means (3,4) and movable between a neutral position (B) and an operating position (A), control means (18) for controlling said actuating devices (15), said control means comprising at least one control unit (18), switching means (23) being provided to selectively connect said at least one control unit (18) to at least one actuating device (15a, 15b, 15c, 15d, 15e) of said plurality of actuating devices (15), **characterised in that** said switching means (23) connects said at least one actuating device (15a, 15b, 15c, 15d, 15e) to said at least one control unit (18) for an interval of time during which said at least one actuating device (15a, 15b, 15c, 15d, 15e) performs while mounted on said turntable means (21) a rotation of a preset angular amplitude and **in that** said switching means (23) interrupts the connection between said at least one actuating device (15a, 15b, 15c, 15d, 15e) and said at least one control unit (18) for a further interval of time during which said at least one actuating device (15a, 15b, 15c, 15d, 15e) performs while mounted on said turntable means (21) a further rotation of a preset angular amplitude

2. Machine according to claim 1, and further comprising a plurality of control units less numerous than said plurality of actuating devices (15).

3. Machine according to claim 2, wherein each control unit (18) of said plurality of control units controls a preset operation of said at least one actuating device (15a, 15b, 15c, 15d, 15e).

4. Machine according to any one of claims 1 to 3, wherein said at least one control unit (18) is arranged in a remote position in relation to said actuating devices (15).

5. Machine according to any one of claims 1 to 4, wherein said at least one control unit (18) is a control logic unit.

6. Machine according to any one of claims 1 to 5, and further comprising at least a supply unit to connect said actuating devices (15) to electric power delivery means.

7. Machine according to claim 6, wherein said at least one supply unit is arranged in a remote position in relation to said actuating devices (15).

8. Machine according to claim 6, or 7, wherein said at least one supply unit is integrated into said at least one control unit (18).

9. Machine according to claim 6, or 7, wherein said at least one supply unit is arranged in a remote position in relation to said at least one control unit (18).

10. Machine according to claim 6, wherein said at least one supply unit comprises a plurality of supply units, each supply unit of said plurality of supply units being arranged near a respective actuating device (15) of said plurality of actuating devices.

11. Machine according to claim 10, wherein said switching means (23) selectively connects said each supply unit to said respective actuating device (15).

12. Machine according to any one of claims 1 to 11, wherein said at least one actuating device comprises a group of actuating devices (15a, 15b, 15c, 15d) that occupies a sector (S) of said turntable means (21).

13. Machine according to any one of claims 1 to 12, wherein said at least one actuating device comprises a plurality of groups of actuating devices that occupy angularly consecutive sectors of said turntable means (21).

14. Machine according to anyone of claims 1 to 13, wherein said further rotation corresponds to an angle substantially explementary to the angle corresponding to said rotation of a preset angular degree.

15. Machine according to any one of claims 1 to 14, and further comprising further switching means (24) arranged to connect to said at least one control unit (18) transducer means arranged to detect the movement of a movable member (7) of said at least one actuating device (15a, 15b, 15c, 15d, 15e).

16. Machine according to any one of claims 1 to 15, and further comprising further transducer means (25) arranged to detect the angular position of said at least one actuating device (15a, 15b, 15c, 15d, 15e) and communicating said angular position to said at least one control unit (18).

17. Machine according to any one of claims 1 to 16, and further comprising mould means driven by said actuating devices (15).

18. Machine according to claim 17, wherein said mould means comprises cavity mould means (3).

19. Machine according to claim 17, or 18, wherein said mould means comprises male mould means (4).

## Patentansprüche

1. Maschine, mit einer Mehrzahl von Aktuierungsvorrichtungen (15), die durch ein rotierbares Drehtischmittel (21) zum Aktuieren eines Gussmittels (3, 4) gestützt sind und zwischen einer Neutralposition (B) und einer Betriebsposition (A) bewegbar sind, einem Regelungsmittel (18) zum Regeln der Aktuierungsvorrichtung (15), wobei das Regelungsmittel mindestens eine Regelungseinheit (18) aufweist, einem Schaltmittel (23), das dazu vorgesehen ist, wahlweise die mindestens eine Regelungseinheit (18) mit mindestens einer Aktuierungsvorrichtung (15a, 15b, 15c, 15d, 15e) der Mehrzahl von Aktuierungsvorrichtungen (15) zu verbinden, **dadurch gekennzeichnet, dass** das Schaltmittel (23) die mindestens eine Aktuierungsvorrichtung (15a, 15b, 15c, 15d, 15e) mit der mindestens einen Regelungseinheit (18) für ein Zeitintervall verbindet, während dem die mindestens eine Aktuierungsvorrichtung (15a, 15b, 15c, 15d, 15e) eine Rotation um eine vorbestimmte Winkelamplitude ausführt, während sie auf dem Drehtischmittel (21) befestigt ist, und dass das Schaltmittel (23) die Verbindung zwischen der mindestens einen Aktuierungsvorrichtung (15a, 15b, 15c, 15d, 15e) mit der mindestens einen Regelungseinheit (18) für ein weiteres Zeitintervall unterbricht, während dem die mindestens eine Aktuierungsvorrichtung (15a, 15b, 15c, 15d, 15e) eine weitere Rotation um eine vorbestimmte Winkelamplitude ausführt, während es auf dem Drehtischmittel (21) befestigt ist.

2. Maschine nach Anspruch 1, des Weiteren mit einer Mehrzahl von Regelungseinheiten in einer geringeren Anzahl als die Mehrzahl von Aktuierungsvorrichtungen (15).

3. Maschine nach Anspruch 2, wobei jede Regelungseinheit (18) der Mehrzahl von Regelungseinheiten einen vorbestimmten Betrieb der mindestens einen Aktuierungsvorrichtung (15a, 15b, 15c, 15d, 15e) regelt.

4. Maschine nach einem der Ansprüche 1 bis 3, wobei die mindestens eine Regelungseinheit (18) in einer entfernten Position relativ zu den Aktuierungsvorrichtungen (15) angeordnet ist.

5. Maschine nach einem der Ansprüche 1 bis 4, wobei die mindestens eine Regelungseinheit (18) eine Steuerelektronikeinheit ist.

6. Maschine nach einem der Ansprüche 1 bis 5, des Weiteren mit mindestens einer Versorgungseinheit, um die Aktuierungsvorrichtung (15) mit einem elektrischen Leistungsversorgungsmittel zu verbinden.

7. Maschine nach Anspruch 6, wobei die mindestens eine Versorgungseinheit in einer entfernten Position in Relation zu der Aktuierungsvorrichtung (15) angeordnet ist.

8. Maschine nach Anspruch 6 oder 7, wobei die mindestens eine Versorgungseinheit in die mindestens eine Regelungseinheit (18) integriert ist.

9. Maschine nach Anspruch 6 oder 7, wobei die mindestens eine Versorgungseinheit in einer entfernten Position in Relation zu der mindestens einen Regelungseinheit (18) angeordnet ist.

10. Maschine nach Anspruch 6, wobei die mindestens eine Versorgungseinheit eine Mehrzahl von Versorgungseinheiten aufweist, wobei jede Versorgungseinheit der Mehrzahl von Versorgungseinheiten nahe einer entsprechenden Aktuierungsvorrichtung (15) der Mehrzahl von Aktuierungsvorrichtungen angeordnet ist.

11. Maschine nach Anspruch 10, wobei das Schaltmittel (23) wahlweise die Versorgungseinheit mit der entsprechenden Aktuierungsvorrichtung (15) verbindet.

12. Maschine nach einem der Ansprüche 1 bis 11, wobei die mindestens eine Aktuierungsvorrichtung eine Gruppe von Aktuierungsvorrichtungen (15a, 15b, 15c, 15d, 15e) aufweist, die einen Sektor (S) des Drehtischmittels (21) einnimmt.

13. Maschine nach einem der Ansprüche 1 bis 12, wobei die mindestens eine Aktuierungsvorrichtung eine Mehrzahl von Gruppen von Aktuierungsvorrichtungen aufweist, die winklig zusammenhängende Sektoren des Drehtischmittels (21) einnehmen.

14. Maschine nach einem der Ansprüche 1 bis 13, wobei die weitere Rotation einem Winkel entspricht, der im Wesentlichen den Winkel entsprechend der Rotation um einen vorbestimmten Winkelgrad ergänzt.

15. Maschine nach einem der Ansprüche 1 bis 14, des Weiteren mit einem weiteren Schaltmittel (24), das dazu angeordnet ist, mit der mindestens einen Regelungseinheit (18) ein Messumformermittel zu verbinden, das dazu angeordnet ist, die Bewegung eines bewegbaren Elements (7) der mindestens einen Aktuierungsvorrichtung (15a, 15b, 15c, 15d, 15e) zu detektieren.

16. Maschine nach einem der Ansprüche 1 bis 15, und des Weiteren mit einem weiteren Messumformermittel (25), das dazu angeordnet ist, die Winkelposition der mindestens einen Aktuierungsvorrichtung (15a, 15b, 15c, 15d, 15e) zu detektieren und die Winkelposition zu der mindestens einen Regelungseinheit (18) zu kommunizieren.

17. Maschine nach einem der Ansprüche 1 bis 16, des Weiteren mit einem Gussmittel, das durch die Aktuierungsvorrichtung (15) angetrieben ist.

18. Maschine nach Anspruch 17, wobei das Gussmittel ein Formhöhlengussmittel (3) aufweist.

19. Maschine nach Anspruch 17 oder 18, wobei das Gussmittel ein männliches Gussmittel (4) aufweist.

## Revendications

1. Machine comprenant une pluralité de dispositifs actionneurs (15) supportés par des moyens rotatifs de carrousel (21), destinés à actionner des moyens de moulage (3, 4) et mobiles entre une position neutre (B) et une position de fonctionnement (A), des moyens de commande (18) destinés à commander lesdits dispositifs actionneurs (15), lesdits moyens de commande comprenant au moins une unité de commande (18), des moyens commutateurs (23) étant prévus pour raccorder de manière sélective ladite au moins une unité de commande (18) à au moins un dispositif actionneur (15a, 15b, 15c, 15d, 15e) de ladite pluralité de dispositifs actionneurs (15), ***caractérisée en ce que*** lesdits moyens commutateurs (23) relient ledit au moins un dispositif actionneur (15a, 15b, 15c, 15d, 15e) à au moins une unité de commande (18) pendant une plage de temps pendant laquelle ledit au moins un dispositif actionneur (15a, 15b, 15c, 15d, 15e) effectue, lorsqu'il est monté sur lesdits moyens de carrousel (21), une rotation d'une amplitude angulaire prédéterminée, et ***en ce que*** lesdits moyens commutateurs (23) interrompent la connexion entre ledit au moins un dispositif actionneur (15a, 15b, 15c, 15d, 15e) et ladite au moins une unité de commande (18) pendant une autre plage de temps pendant laquelle ledit au moins un dispositif actionneur (15a, 15b, 15c, 15d, 15e) effectue, lorsqu'il est monté sur lesdits moyens de carrousel (21), une autre rotation d'une amplitude angulaire prédéterminée.

2. Machine selon la revendication 1, et comprenant en outre une pluralité d'unités de commande moins nombreuses que ladite pluralité de dispositifs actionneurs (15).

3. Machine selon la revendication 2, dans laquelle chaque unité de commande (18) de ladite pluralité d'unités de commande commande une opération prédéterminée dudit au moins un dispositif actionneur (15a, 15b, 15c, 15d, 15e).

4. Machine selon l'une quelconque des revendications 1 à 3, dans laquelle au moins une unité de commande (18) est installée dans une position éloignée par rapport auxdits dispositifs actionneurs (15).

5. Machine selon l'une quelconque des revendications 1 à 4, dans laquelle ladite au moins une unité de commande (18) est une unité de commande logique.

6. Machine selon l'une quelconque des revendications 1 à 5, et comprenant en outre au moins une unité d'alimentation pour relier lesdits dispositifs actionneurs (15) à des moyens fournisseurs d'énergie électrique.

7. Machine selon la revendication 6, dans laquelle ladite au moins une unité d'alimentation est installée dans une position éloignée par rapport auxdits dispositifs actionneurs (15).

8. Machine selon la revendication 6 ou 7, dans laquelle ladite au moins une unité d'alimentation est intégrée dans ladite au moins une unité de commande (18).

9. Machine selon la revendication 6 ou 7, dans laquelle ladite au moins une unité d'alimentation est installée dans une position éloignée par rapport à ladite au moins une unité de commande (18).

10. Machine selon la revendication 6, dans laquelle ladite au moins une unité d'alimentation comprend une pluralité d'unités d'alimentation, chaque unité d'alimentation de ladite pluralité d'unités d'alimentation étant disposée à proximité d'un dispositif actionneur respectif (15) de ladite pluralité de dispositifs actionneurs.

11. Machine selon la revendication 10, dans laquelle lesdits moyens commutateurs (23) connectent de manière sélective chaque unité d'alimentation audit dispositif actionneur respectif (15).

12. Machine selon l'une quelconque des revendications 1 à 11, dans laquelle ledit au moins un dispositif actionneur comprend un groupe de dispositifs actionneurs (15a, 15b, 15c, 15d) qui occupent un secteur (S) desdits moyens de carrousel (21).

13. Machine selon l'une quelconque des revendications 1 à 12, dans laquelle ledit au moins un dispositif actionneur comprend une pluralité de groupes de dispositifs actionneurs qui occupent des secteurs angulairement consécutifs desdits moyens de carrousel (21).

14. Machine selon l'une quelconque des revendications 1 à 13, dans laquelle ladite autre rotation correspond à un angle qui forme un angle essentiellement plein avec l'angle correspondant à ladite rotation d'une degré angulaire prédéfini.

15. Machine selon l'une quelconque des revendications 1 à 14, et comprenant en outre d'autres moyens commutateurs (24) prévus pour raccorder à ladite au moins une unité de commande (18) des moyens transducteurs prévus pour détecter le mouvement d'un élément mobile (7) dudit au moins un dispositif actionneur (15a, 15b, 15c, 15d, 15e).

16. Machine selon l'une quelconque des revendications 1 à 15, et comprenant en outre d'autres moyens transducteurs (25) prévus pour détecter la position angulaire dudit au moins un dispositif actionneur (15a, 15b, 15c, 15d, 15e) et communiquant ladite position angulaire à ladite au moins une unité de commande (18).

17. Machine selon l'une quelconque des revendications 1 à 16, et comprenant en outre des moyens de moules entraînés par lesdits dispositifs actionneurs (15).

18. Machine selon la revendication 17, dans laquelle lesdits moyens de moules comprennent des moyens de moules (3) à cavité.

19. Machine selon la revendication 17 ou 18, dans laquelle lesdits moyens de moules comprennent des moyens de moules mâles (4).
